# EUROPÄISCHE PATENTSCHRIFT

(11) **EP 0 440 156 B1**
(45) Veröffentlichungstag und Bekanntmachung des Hinweises auf die Patenterteilung: **22.11.1995**
(21) Anmeldenummer: 91101127.8
(22) Anmeldetag: 29.01.1991
(51) Int. Cl.: F24J 2/04

(54) **Fassadenelement**
Facade element
Elément de façade

(30) Priorität: 29.01.1990 DE 4002518
(43) Veröffentlichungstag der Anmeldung: 07.08.1991
(73) Patentinhaber: FRAUNHOFER-GESELLSCHAFT ZUR FÖRDERUNG DER ANGEWANDTEN FORSCHUNG E.V., 80636 München (DE)
(72) Erfinder: Goetzberger, Adolf, Prof. Dr., W-7802 Merzhausen (DE)

(56) Entgegenhaltungen:
- DE-A- 2 738 253
- DE-A- 3 529 493
- FR-A- 2 291 462
- FR-A- 2 327 501
- US-A- 4 260 225
- US-A- 4 261 331
- US-A- 4 307 942
- SOVIET PATENTS ABSTRACTS Section PQ, Week 8646, 27. November 1986 Derwent Publications Ltd., London, GB; Class Q74, & SU-A-1 218 263 (ARMN CURRENT SOURCE) 15. März 1986

## Beschreibung

Die Erfindung betrifft ein Fassadenelement gemäß dem Oberbegriff des Anspruchs 1 oder 8.

### Stand der Technik

Transparente Wärmedämmelemente (TWDelementewand, usw.) zur passiven Beheizung von Gebäuden sind heute bereits in ersten Pilotvorhaben in Erprobung (Lit. BMFT Statusbericht Energetische Optimierung der Solarapertur 1989, FIZ Karlsruhe, Proc. 3rd int. Workshop on transparent Insulation 1989, Ed. L. Jesch, Frankin Company Ltd., 192 Franklin Rd., Birmingham, UK). Große Energieeinsparungen während der Heizsaison wurden nachgewiesen. Ein wesentliches Problem sind jedoch die Kosten dieser Systeme. Diese werden zu einem erheblichen Teil durch die Notwendigkeit der Regelung des Strahlungsflusses zur Vermeidung von Überhitzung verursacht. Die einzige heute verfügbare Methode besteht in mechanischen Verschattungseinrichtungen. Üblich sind Rollos aus lichtreflektierenden Folien oder diverse Jalousienanordnungen. Auch laubabwerfende Kletterpflanzen wurden bereits vorgeschlagen. Diese sind allerdings in ihrer Abschasttungswirkung auf den Wärmebedarf nur unvollkommen angepaßt.

Die Regelung der Verschattungseinrichtungen erfolgt über Temperaturfühler, die z.B. die Außentemperatur und die Absorbertemperatur (Temperatur der massiven Außenwand) messen.

Andererseits ist aus der FR A 2 291 462 ein Sonnenkollektor mit einer thermotropen Schicht auf dem Absorber des Kollektors bekannt, und zur Isolierung weist dieser Kollektor zwischen der Abdeckscheibe eine Luftschicht auf. Die thermotrope Schicht dient hier jedoch nur als Überhitzungsschutz des Kollektors. Für eine Regelung eines Fassadenelementes ist diese Konstruktion, wie später im Einzelnen dargelegt ist, nicht geeignet.

Aufgabe der Erfindung ist es, eine passive selbsttätige Temperaturregelung zu schaffen, die ohne bewegliche Teile auskommt.

Diese Aufgabe wird erfindungsgemäß durch das Fassadenelement nach Anspruch 1 oder 8 gelöst.

Im Bestreben, die mechanische Strahlungsregelung mit ihren Kosten und Zuverlässigkeitsproblemen zu vermeiden, sind zwei Wege denkbar:
- elektrisch schaltbare Schichten, z.B. auf elektrochromer Basis. Diese Schichten befinden sich noch in Entwicklungsstadien. Ihre Kosten würden auch bei größeren Produktionszahlen sehr hoch sein.
- Temperaturabhängig schaltende chemische Schichten (thermotrope Schichten). Es handelt sich dabei um Polymerlösungen, z.B. Mischungen aus Polystyrol und PMMA (Polymethylmethacrylat), die bei einer vorgegebenen Temperatur vom klardurchsichtigen Zustand in einen lichtstreuenden Zustand mit stark reduzierter Transparenz übergehen. Sie existieren heute als Labormuster entweder als Gel DEOS 35 22 078 zwischen zwei Glasplatten oder in Folienform DBP 34 36 477.

### Probleme der thermotropen Schichten

Thermotrope Schichten der beschriebenen Art stellen an sich eine ideale Lösung des Strahlungsregelungsproblems dar: sie sind leicht herstellbar und daher kostengünstig; sie benötigen keinen Steuer oder Regelungsaufwand, d.h. sie sind ein rein passives Element. Nachteilig ist jedoch, daß sie bei einer bestimmten Temperatur schalten, während die TWDWand durch zwei Temperaturen geregelt werden muß. Wenn man nach der Umgebungstemperatur Tu regelt, kann die Absorbertemperatur gefährlich hohe Werte erreichen, so daß die TWDSchicht zerstört und die Wand gefährdet wird. Verwendet man andererseits die Absorbertemperatur als Regelgröße, wie z.B. die FR A-2 291 462, dann wird bei viel zu hohen Umgebungstemperaturen noch geheizt. In beiden Fällen wird dabei auch die Raumtemperatur sehr hoch.

Überraschend hat sich nun gezeigt, daß die Maßnahmen nach Anspruch 1 bzw. 8 das Problem auf einfache Art und Weise lösen.

Vorteilhafte Ausgestaltungen sind in den Unteransprüchen gekennzeichnet.

Eine besonders vorteilhatte Lösung des Problems ergibt sich durch die Verwendung von thermotropen Lacken gemäß z.B. DE 34 36 477.

Durch die Verwendung dieses Lackes ergibt sich ein erfindungsgemäßes Fassadenelement nach Anspruch 8, bei der eine Lackschicht auf der der Sonnenseite abgewandten Seite der transparenten Abdeckung angebracht wird und die bei der im folgenden definierten Temperatur Tu max schaltet und die zweite Schicht auf dem Absorber selbst angebracht ist und unterhalb der maximal zulässigen Absorbertemperatur schaltet. Hierdurch wird erreicht, daß man die thermotrope Schicht nicht zwischen das Wärmedämmmaterial einbringen muß. Andererseits muß man zwei thermotrope Lackschichten verwenden.

Im folgenden wird die Erfindung kurz erläutert:
Anspruch 6 gibt an, wie am vorteilhaftesten der Ort der Aufstellung der thermotropen Schicht innerhalb der transparenten Dämmschicht angeordnet ist und andererseits die entsprechende Schalttemperatur ermittelt werden kann. Da das Wärmedämmmaterial transparent ist, hat es in der Regel auch eine sehr geringe Wärmekapazität, d.h. die Luft innerhalb der Wärmedämmschicht reagiert auf Temperaturschwankungen sehr schnell und der Temperaturverlauf ist daher linear. Auf einem Diagramm wäre nach oben die Temperatur im TWDMaterial aufgetragen und auf der Abszisse die geometrische Anordnung des Fassadenelementes.

Zwischen der transparenten Abdeckungsrückseite und der TWDSchicht ist normalerweise kein Luftspalt, da es vorteilhaft ist, wenn die Abdeckung auf der TWDSchicht aufliegt, da so keine Konvektion in der TWDSchicht auftreten kann.

Zwischen der TWDSchicht und der Außenwand des Gebäudes bzw. dem darauf angebrachten Absorber, ist normalerweise ein Luftspalt vorzusehen. Durch die meist rauhe Außenwand, ist jedoch sowieso ein Luftspalt gewährleistet. Falls ein größerer Luftspalt vorgesehen ist, z.B. konstruktiv infolge Wandvorsprüngen usw., ist dieser Luftspalt mit zu berücksichtigen. Diese Luftschicht ändert den linearen Temperaturverlauf in der TWDSchicht nicht. Es kann dann vorteilhaft sein, die TWDSchicht mit einer Folie zu verschliessen.

In dem Diagramm wären eingetragen zwei lineare Temperaturverläufe, die zur Ermittlung des Ortes der Schalttemperatur dienen. Eine erste Gerade entspricht der Extrembedingung im Winter: Verschattung wegen Überhitzung der Wand, Ta max ist die maximal zulässige Wandtemperatur. Sie beträgt normalerweise 70 - 90°, so daß mit 80° ein vorteilhafter Mittelwert genommen werden kann. Tu min ist die minimale Umgebungstemperatur unter den entsprechenden Bedingungen, die weiter unten angegeben sind. Die zweite Gerade gibt zwei andere Extrembedingungen wider: TR ist die gewünschte Raumtemperatur, Tu max ist die maximale Außentemperatur, bei der noch Heizbedarf existiert.

Erkennbar wäre dann, daß sich die beiden Geraden in einem Punkt schneiden. Wenn die thermotrope Schicht an diesem Ort mit der durch den Schnittpunkt vorgegebenen Schalt Temperatur angeordnet wird, können beide Abschattungsbedingungen mit einer Umschalttemperatur des thermotropen Materials erfüllt werden. Die genaue Definition der extremen Außentemperaturen ist wie folgt:
Tu max ist die maximale Außentemperatur an der betreffenden Fassade bei Tag unter Berücksichtigung der Sonnenbestrahlung, bei der noch Heizung erforderlich ist, in der Praxis etwa 13 - 15° C. Diese Temperatur ist höher, als die über 24 Stunden gemittelte Durchschnittstemperatur, die sonst als Maß für den Heizbedarf genommen wird. Tu min ist die minimale Außentemperatur, die im Winter bei Sonnenschein vor der betreffenden Fassade zu erwarten ist. Dieser Wert Tu min ist ortsabhängig entsprechend den kältesten Tagen in der betreffenden Gegend. Der Wert liegt i.a. zwischen 5 - 15°C. Diese Definition berücksichtigt, daß Überhitzungsgefahr nur bei starker Sonnenbestrahlung auftritt.

Die Anordnung der thermotropen Schicht zwischen Absorber und transparentem Isoliermaterial hat auch den Vorteil, daß eventuell auftretende Lichtabsorption im transparenten Zustand der thermotropen Schicht nicht zu merklichen Energieverlusten führt, da der Wärmeübergangswiderstand zum Absorber viel geringer ist als zur Außenluft.

### Weitere Gesichtspunkte

Die Anordnung der thermotropen Schicht im Inneren des TWDMaterials erfordert eine Unterteilung des Materials. Wenn Wabenmaterial zur Konvektionsunterdrückung eingesetzt wird, dann sollte dieses ohne Zwischenraum an die thermotrope Schicht anschließen, um Konvektion zu unterbinden. In diesem Fall sind äußere Abschlüsse mit transparenten Folien nicht mehr erforderlich. Das thermotrope Material kann so hergestellt werden, daß die Umschaltung in einem gewissen Temperaturbereich, erfolgt, z.B. etwa 5°, so kann die Umschaltung z.B. bei 15° beginnen und bei 20° beendet sein. Dies ist für die hier vorgeschlagene Lösung günstig, da dann eine gewisse Feinregelung der Heizenergie erzielt wird.

In der Prioritätsanmeldung DE-A1 40 02 518 ist das Diagramm abgebildet.

## Patentansprüche

1. Fassadenelement mit inhärenter Temperaturregelung zur passiven Gebäudeheizung, bestehend aus einer transparenten Abdeckung und einem transparenten Wärmedämmaterial und einer Schicht aus einem Material mit temperaturabhängiger Lichtdurchlässigkeit (thermotropes Material) vor dem zu beheizenden Gebäudeteil,
**dadurch gekennzeichnet,**
daß die thermotrope Schicht parallel zum Gebäudeteil im Inneren des transparenten Wärmedämmaterials und zwar im vorderen Drittel der der Sonne zugewandten Seite angeordnet ist.

2. Fassadenelement nach Anspruch 1,
**dadurch gekennzeichnet,**
daß die Schalttemperatur der thermotropen Schicht zwischen 13 und 22° C liegt, vorzugsweise zwischen 17° und 19°.

3. Fassadenelement nach einem der Ansprüche 1 - 2,
**dadurch gekennzeichnet,**
daß das thermotrope Material durch einen Schaltbereich von etwa 5° zwischen maximaler und minimaler Transparenz gekennzeichnet ist.

4. Fassadenelement nach Anspruch 1,
**dadurch gekennzeichnet,**
daß das transparente Wärmedämmaterial aus transparenten Kunststoffwabenstrukturen oder aus Aerogel entweder in Plattenform oder als Granulatschüttung besteht.

5. Fassadenelement nach Anspruch 4,
**dadurch gekennzeichnet,**
daß das Wabenmaterial an der thermotropen Schicht eng anliegt.

6. Fassadenelement nach Anspruch 1,
**dadurch gekennzeichnet,**
daß der Ort und die Schalttemperatur der thermotropen Schicht in einem Koordinatensystem, bei dem die Ordinate die Temperatur angibt und auf der Abszisse die Geometrie des Fassadenelementes aufgetragen ist, graphisch durch den Schnittpunkt zweier Geraden ermittelbar ist: eine erste Gerade: der lineare Temperaturverlauf ist gegeben durch die minimale Außentemperatur Tu min vor der Fassade bei Sonnenschein im Winter und der maximal zulässigen Absorbertemperatur Ta max und eine zweite Gerade: der lineare Temperaturverlauf ist gegeben durch die maximale Tagesaußentemperatur Tu max bei der noch Heizung gewünscht wird und der gewünschten Raumtemperatur TR auf der Innenseite des Isolationsmaterials.

7. Fassadenelement nach einem der Ansprüche 1 - 6,
**dadurch gekennzeichnet,**
daß die thermotrope Schicht aus einem Gel, einer Folie oder einem Lack aus einer Mischung aus Polymerlösungen, die auf einem transparenten Trägermaterial aufgebracht ist, besteht.

8. Fassadenelement zur passiven Gebäudeheizung, bestehend aus einer transparenten Abdeckung und einem transparenten Wärmedämmaterial und mindestens einer Schicht aus einem Material mit temperaturabhängiger Lichtdurchlässigkeit (thermotropes Material), vor dem Absorber des zu beheizenden Gebäudeteils,
**dadurch gekennzeichnet**,
daß zwei Schichten vorgesehen sind und beide Schichten aus thermotropem Lack bestehen, wobei die erste Schicht auf der Innenseite der transparenten Abdeckung aufgebracht ist und bei etwa der Temperatur Tu max, der maximalen Außentemperatur, bei der noch Heizbedarf existiert, schaltet und einer zweiten Schicht, die auf dem Absorber selbst aufgebracht ist und bei einer Temperatur schaltet, die kleiner als die maximal zulässige Absorbertemperatur Ta max ist.

## Claims

1. Façade element with inherent temperature regulation for passive heating of buildings, consisting of a transparent cover and a transparent heat-insulating material and a layer of a material with temperature-dependent light-transmitting capacity (thermotropic material) in front of the building portion to be heated, characterised in that the thermotropic layer is arranged parallel to the building portion inside the transparent heat-insulating material, in the front third of the side facing towards the sun.

2. Façade element according to claim 1, characterised in that the switching temperature of the thermotropic layer is between 13 and 22°C, preferably between 17° and 19°.

3. Façade element according to either of claims 1 - 2, characterised in that the thermotropic material is characterised by a switching range of about 5° between maximum and minimum transparency.

4. Façade element according to claim 1, characterised in that the transparent heat-insulating material consists of transparent plastic honeycomb structures or solid foam either in slab form or as loose granules.

5. Façade element according to claim 4, characterised in that the honeycomb material fits closely against the thermotropic layer.

6. Façade element according to claim 1, characterised in that the location and the switching temperature of the thermotropic layer can be determined graphically by the point of intersection of two straight lines in a coordinate system in which the ordinate indicates the temperature and on the abscissa is plotted the geometry of the façade element: a first straight line: the linear temperature curve is given by the minimum outside temperature Tu min in front of the façade in sunshine in winter and the maximum permitted absorber temperature Ta max; and a second straight line: the linear temperature curve is given by the maximum daytime outside temperature Tu max at which heating is still desired and the desired room temperature TR on the inside of the insulating material.

7. Façade element according to any of claims 1 - 6, characterised in that the thermotropic layer consists of a gel, a film or a lacquer made of a mixture of polymer solutions which is applied to a transparent substrate material.

8. Façade element for passive heating of buildings, consisting of a transparent cover and a transparent heat-insulating material and at least one layer of a material with temperature-dependent light-transmitting capacity (thermotropic material), in front of the absorber of the building portion to be heated, characterised in that two layers are provided and both layers consist of thermotropic lacquer, wherein the first layer is applied to the inside of the transparent cover and switches at approximately the temperature Tu max, the maximum outside temperature at which there is still a need for heating, and a second layer which is applied to the absorber itself and switches at a temperature which is lower than the maximum permitted absorber temperature Ta max.

## Revendications

1. Elément de façade à régulation inhérente de la température pour le chauffage passif d'un immeuble, comprenant un revêtement transparent et un matériau d'isolation thermique transparent, ainsi qu'une couche en un matériau à transparence dépendant de la température (matière thermotrope) devant la partie d'immeuble à chauffer,
caractérisé en ce que :
on place la couche thermotrope parallèlement à la partie de l'immeuble à l'intérieur de la matière d'isolation thermique transparente, à savoir dans le tiers avant de la face tournée vers le soleil.

2. Elément de façade selon la revendication 1,
caractérisé en ce que :
la température de commutation de la couche thermotrope est comprise entre 13 et 22°C et de préférence entre 17 °C et 19°C.

3. Elément de façade selon l'une des revendications 1 et 2,
caractérisé en ce que :
la matière thermotrope est caractérisée par une plage de commutation d'environ 5° entre la transparence maximale et la transparence minimale.

4. Elément de façade selon la revendication 1,
caractérisé en ce que :
la matière d'isolation thermique transparente est en des structures en nid d'abeilles de matière plastique transparente ou en aérogel, soit sous forme de plaques, soit sous forme de granulés en vrac.

5. Elément de façade selon la revendication 4,
caractérisé en ce que :
le matériau en nid d'abeilles est étroitement appliqué contre la couche thermotrope.

6. Elément de façade selon la revendication 1,
caractérisé en ce que :
l'emplacement et la température de commutation de la couche thermotrope dans le système de coordonnées dans lequel les ordonnées correspondent à la température et les abscisses à la géométrie de l'élément de façade, se déterminent graphiquement comme points d'intersection de deux droites : une première droite qui correspond au profil linéaire de la température donné par la température extérieure minimale Tu min devant la façade lorsque le soleil brille en hiver et la température maximale autorisée de l'absorbeur Ta max, ainsi qu'une seconde droite dont le profil linéaire est donné par la température extérieure maximale Tu max à laquelle on souhaite encore du chauffage et la température de la pièce souhaitée TR sur la face intérieure du matériau d'isolation.

7. Elément de façade selon l'une des revendications 1 à 6,
caractérisé en ce que :
la couche thermotrope est un gel, une feuille ou un vernis d'un mélange en solution de polymères appliqués sur un matériau de support transparent.

8. Elément de façade pour le chauffage passif d'un immeuble, composé d'un revêtement transparent, d'une matière d'isolation thermique transparente et d'au moins une couche d'un matériau à transparence dépendant de la température (matière thermotrope) devant l'absorbeur de la partie d'immeuble à chauffer,
caractérisé en ce que :
il y a deux couches de vernis thermotropes, la première couche étant appliquée sur la face intérieure du revêtement transparent et commutant à une température Tu max qui correspond sensiblement à la température extérieure maximale pour laquelle il existe encore une demande en chauffage, et la seconde couche étant appliquée directement sur l'absorbeur et commutant à une température inférieure à la température maximale autorisée de l'absorbeur Ta max.
